# EUROPÄISCHE PATENTANMELDUNG

(11) **EP 2 384 651 A1**
(43) Veröffentlichungstag der Anmeldung: **09.11.2011**
(21) Anmeldenummer: 11164427.4
(22) Anmeldetag: 02.05.2011
(51) Int. Cl.: A24C 5/32, B65G 51/02

(54) **Vorrichtung und Verfahren zum Überführen stabförmiger Artikel der Tabak verarbeitenden Industrie aus einem Magazin in eine Förderleitung mit konstanter Druckluftströmung im Abschusskanal**

(30) Priorität: 04.05.2010 DE 102010020009
(71) Anmelder: HAUNI Maschinenbau AG, 21033 Hamburg (DE)
(72) Erfinder: Dombek, Manfred, 21521, Dassendorf (DE)
(74) Vertreter: Wenzel & Kalkoff

(57) **Zusammenfassung**

Die Erfindung betrifft eine Vorrichtung (10) zum Überführen stabförmiger Artikel (14) der Tabak verarbeitenden Industrie aus einem Magazin (15) in eine Förderleitung (24), umfassend eine Sendereinheit (11), die eine rotierend antreibbare Trommel (12) mit Mulden (13) zum Aufnehmen der stabförmigen Artikel (14) aus dem unter Atmosphärendruck stehenden Magazin (15) und queraxialen Fördern der stabförmigen Artikel (14) direkt in den Abgabebereich einer Ausblaszone (16) umfasst, wobei die Trommel (12) von einem die Trommel (12) teilweise kreisbogenförmig umschließenden Dichtschuh (18) zur Bildung eines Dichtbereichs (19) umgeben ist und im Bereich der Ausblaszone (16) ein aus einer jeweils durch Rotation der Trommel (12) in der Ausblaszone (16) befindlichen Mulde (13) und dem Dichtschuh (18) gebildeter Abschusskanal (21) vorgesehen ist, und wobei ein Zugang (22) zum Einleiten einer Druckluftströmung in den Abschusskanal (21) für den Abschuss des jeweils in dem Abschusskanal (21) befindlichen Artikels (14) ausgebildet ist, die sich dadurch auszeichnet, dass der Zugang (22) zum Einleiten einer konstanten Druckluftströmung in den Abschusskanal (21) ausgebildet und eingerichtet ist, wobei der Zugang (22) stets mit mindestens zwei benachbarten Mulden (13) verbunden ist. Des Weiteren betrifft die Erfindung ein entsprechendes Verfahren.

## Beschreibung

### Beschreibung

Die Erfindung betrifft eine Vorrichtung zum Überführen stabförmiger Artikel der Tabak verarbeitenden Industrie aus einem Magazin in eine Förderleitung, umfassend eine Sendereinheit, die eine rotierend antreibbare Trommel mit Mulden zum Aufnehmen der stabförmigen Artikel aus dem unter Atmosphärendruck stehenden Magazin und queraxialen Fördern der stabförmigen Artikel direkt in den Abgabebereich einer Ausblaszone umfasst, wobei die Trommel von einem die Trommel teilweise kreisbogenförmig umschließenden Dichtschuh zur Bildung eines Dichtbereichs umgeben ist und im Bereich der Ausblaszone ein aus einer jeweils durch Rotation der Trommel in der Ausblaszone befindlichen Mulde und dem Dichtschuh gebildeter Abschusskanal vorgesehen ist, und wobei ein Zugang zum Einleiten einer Druckluftströmung in den Abschusskanal für den Abschuss des jeweils in dem Abschusskanal befindlichen Artikels ausgebildet ist.

Des Weiteren betrifft die Erfindung ein Verfahren zum Überführen stabförmiger Artikel der Tabak verarbeitenden Industrie aus einem Magazin in eine Förderleitung, mit den Schritten: Aufnehmen der stabförmigen Artikel aus dem unter Atmosphärendruck stehenden Magazin in Mulden einer Trommel, queraxiales Fördern der stabförmigen Artikel direkt in den Abgabebereich einer Ausblaszone mittels der Trommel, und axiales Fördern der Artikel aus einem aus einer jeweils durch Rotation der Trommel in der Ausblaszone befindlichen Mulde und einem Dichtschuh gebildeten Abschusskanal durch eine in den Abschusskanal eingeleitete Druckluftströmung.

Solche Vorrichtungen und Verfahren kommen in der Tabak verarbeitenden Industrie zum Einsatz, um stabförmige Artikel, wie z.B. Filter oder Filterstäbe, schnell und zuverlässig über unterschiedliche Distanzen in ihrer Längserstreckung axial zu fördern. Dabei werden die Artikel aus einem Vorrat oder einem Magazin der Sendereinheit zugeführt. Innerhalb der Sendereinheit werden die Artikel über eine rotierende Trommel einzeln in den Bereich einer Ausblaszone bzw. eines in der Ausblaszone zwischen einer Mulde der Trommel und dem Dichtschuh gebildeten Abschusskanals zugeführt und von da über eine pneumatische Rohrleitung bzw. Förderleitung an eine Empfängereinheit gefördert bzw. geschossen. Zum Fördern der Artikel wird üblicherweise Druckluft als Förderluft eingesetzt.

Aus dem Stand der Technik sind unterschiedliche Vorrichtungen und Verfahren zum Überführen stabförmiger Artikel bekannt, die auf unterschiedlichen Funktionsprinzipien basieren. Dabei wird im Wesentlichen zwischen einer Eintrommel-Sendestation und einer Mehrtrommelsendestation unterschieden, die jedoch beide mit einer getakteten Druckluftströmung in der Ausblaszone bzw. dem Abschusskanal arbeiten. Aus der EP 0 640 296 B1 ist beispielsweise eine solche Eintrommel-Sendestation mit den Merkmalen des Oberbegriffes des Anspruches 1 bekannt, bei der die Druckluftströmung getaktet in die Ausblaszone bzw. den Abschusskanal eingelassen wird. Dazu ist der Trommel ein Steuerflansch zugeordnet, wobei der Steuerflansch über den Umfang verteilt beabstandet zueinander angeordnete Steuerschlitze aufweist. Jeder Mulde der Trommel ist ein Schlitz in dem Steuerflansch zugeordnet. Kommt ein Steuerschlitz mit einem in dem Dichtschuh ausgebildeten Zugang für Druckluft in Überdeckung, kann die Druckluft in die Ausblaszone bzw. genauer in die den Abschusskanal bildende Mulde strömen. Die Artikel werden zunächst in die Ausblaszone bzw. genauer in den Abschusskanal transportiert, in dem zum Zeitpunkt des Einlegens des Artikels kein Förderdruck, sondern lediglich der Rohrdruck besteht, da die Verbindung zwischen dem Zugang für die Druckluft und dem Abschusskanal durch den zwischen zwei Steuerschlitzen befindlichen Steg abgedeckt wird. Dann wird, bedingt durch die Rotation der Trommel und damit des Steuerflansches, kurzzeitig, nämlich im Zeitpunkt der Überdeckung des der Mulde zugeordneten Schlitzes mit dem Zugang, die Druckluftströmung in die Ausblaszone bzw. den Abschusskanal gelassen, so dass der Artikel von hinten impulsartig gegen den Rohrdruck angeschoben und dadurch axial in die Förderleitung transportiert wird. Dies hat jedoch den Nachteil, dass die Artikel quasi gestaucht werden, wodurch insbesondere bei höheren Förderdrücken für schwerere Artikel und/oder für eine höhere Förderleistung eine die Artikel beschädigende Belastung auf diese wirkt. Man kann auch sagen, dass der Rohrdruck quasi als Bremse für die abzuschießenden Artikel wirkt, so dass die Förderleistung reduziert wird. Mit den aus dem Stand der Technik bekannten Vorrichtungen und Verfahren sind demnach nur geringere Förderleistungen realisierbar. Des Weiteren weisen die bekannten Vorrichtungen bei höheren Förderdrücken Leckverluste auf, was neben dem Leistungsverlust auch zu einer unangenehmen Lärmbelästigung führt.

Der Erfindung liegt somit die Aufgabe zugrunde, eine einfache und zuverlässige Vorrichtung zum schnellen und effizienten Überführen der Artikel aus dem Magazin in die Förderleitung zu schaffen. Des Weiteren liegt der Erfindung die Aufgabe zugrunde, ein entsprechendes Verfahren vorzuschlagen.

Diese Aufgabe wird durch eine Vorrichtung mit den eingangs genannten Merkmalen dadurch gelöst, dass der Zugang zum Einleiten einer konstanten Druckluftströmung in den Abschusskanal ausgebildet und eingerichtet ist, wobei der Zugang stets mit mindestens zwei benachbarten Mulden verbunden ist. Anders ausgedrückt ist die Vorrichtung und genauer die Sendereinheit dazu ausgebildet und eingerichtet, um in der Ausblaszone einen konstanten Förderdruck zu erzeugen und zu halten. Gegenüber den herkömmlichen Vorrichtungen, die mit einer getakteten Luftströmung in der Ausblaszone arbeiten, ist es durch die erfindungsgemäße Ausbildung möglich, die Artikel quasi in eine dauerhaft bestehende Luftströmung einzulegen, so dass der Artikel ohne jeden Gegendruck einfach von der herrschenden Luftströmung mitgerissen wird. Dadurch ist die Leistungsfähigkeit gegenüber herkömmlichen Vorrichtungen erhöht, da der vorhandene Förderdruck vollständig und ausschließlich zur Förderung der Artikel eingesetzt werden kann, ohne einen Gegendruck überwinden zu müssen. Dadurch sind auch schwerere Artikel über eine längere Förderstrecke transportierbar. Das Abschießen der Artikel direkt aus der Mulde als Bestandteil des Abschusskanals ermöglicht eine kompakte Bauweise der Vorrichtung.

Eine zweckmäßige Ausführungsform der Erfindung zeichnet sich dadurch aus, dass der Zugang zum Einleiten der Druckluftströmung zum Aufbauen und Halten eines konstanten Förderdrucks in dem Abschusskanal direkt in die Ausblaszone mündet, wobei der Zugang bzw. die Einlassöffnung des Zugangs breiter als die maximale Breite einer Mulde nebst einem zugehörigen Steg der Trommel ist. Größer bedeutet in diesem Zusammenhang, dass der Querschnitt des Zugangs bzw. der Einlassöffnung in den Abmessungen größer ist als der Querschnitt einer Mulde der Trommel einschließlich eines zwei Mulden trennenden Stegs. Dadurch werden im Bereich der Ausblaszone stets mindestens zwei Mulden gleichzeitig von der Druckluftströmung durchströmt, die in den Abschusskanal einströmt, so dass permanent ein Förderdruck in dem Abschusskanal herrscht. Gelangt ein Artikel aufgrund der Trommeldrehung in die Abschussposition, so wird dieser unverzüglich in axialer Richtung von der Druckluftströmung mitgerissen und in die Förderleitung transportiert.

Vorteilhafterweise überdeckt der Zugang bzw. die Einlassöffnung des Zugangs mindestens zwei Mulden der Trommel. Dadurch wird das zuvor als vorteilhaft beschriebene Funktionsprinzip eines konstanten Förderdrucks innerhalb des Abschusskanals noch weiter verbessert.

Vorzugsweise ist der Dichtschuh ein ortsfestes Dichtgehäuse, das gegenüber der Trommel unbewegbar angeordnet ist. Durch die Ausbildung des Dichtschuhs als ortsfestes Dichtgehäuse wird insgesamt eine höhere Dichtigkeit erreicht. Zum einen werden dadurch die Leckverluste reduziert. Zum anderen kann auf einen Gegendruck, wie er bei bewegbaren Dichtschuhen zur Erzielung einer ausreichenden Dichtigkeit notwendig ist, verzichtet werden.

Eine vorteilhafte Ausführungsform ist dadurch gekennzeichnet, dass der kreisbogenförmige Dichtbereich des Dichtschuhs zur Bildung der Dichtfläche zwischen der Trommel und dem Dichtschuh größer als 180° und kleiner als 360° ist. Diese vergrößerte Ausbildung der Dichtfläche verbessert die Dichtigkeit und damit die Effizienz der Vorrichtung insgesamt. Des Weiteren gewährleistet diese Ausbildung auf besonders effektive Weise, dass die Mulden der Trommel einerseits einem Bereich mit Atmosphärendruck (nämlich im Bereich des Magazins) und einem Förder- bzw. Überdruckbereich (nämlich im Bereich des Abschusskanals) zugeordnet sind.

Vorteilhafterweise weist der Dichtschuh im Bereich der Ausblaszone eine Öffnung zum Reinigen und/oder Warten der Ausblaszone auf, wobei die Öffnung durch ein gegen den Dichtschuh linear anliegendes Dichtelement dichtend verschließbar ist. Dadurch ist ein einfacher und schneller Zugriff auf mögliche Problemzonen gewährleistet. Beispielsweise lassen sich hierdurch Klebstoffanhaftungen und/oder Artikelreste und/oder Papierreste leicht entfernen. Die lineare Flächendichtung führt dazu, dass Leckverluste im Bereich der Öffnung wirksam verhindert werden.

Eine zweckmäßige Weiterbildung der Erfindung zeichnet sich dadurch aus, dass im Dichtbereich der Abstand zwischen der der Trommel zugewandten konkaven bzw. kreisbogenförmigen Wandung des Dichtschuhs und dem Grund der Mulde der rotierenden Trommel kleiner ist als die Breite der Mulde auf der Höhe des halben Abstands und vorzugsweise kleiner als der Durchmesser der zu fördernden Artikel ist. Das bedeutet nichts anderes, als dass der Abstand kleiner ist als die Breite der Mulde in einer Tiefe, die etwa dem halben Abstand (ungefähr die Muldenmitte in radialer Richtung) entspricht. Dadurch sind die Artikel innerhalb der Mulden innerhalb des Dichtbereiches geklemmt. Die Klemmung bzw. Pressung der Artikel auf dem Weg vom Magazin zur Ausblaszone verhindert eine vorzeitige axiale Bewegung der Artikel.

Die Aufgabe wird auch durch ein Verfahren mit den eingangs genannten Schritten dadurch gelöst, dass die Artikel im Abschusskanal durch eine konstante Druckluftströmung axial in die Förderleitung transportiert werden, wobei stets mehr als eine Mulde im Bereich der Ausblaszone kontinuierlich von einer Druckluftströmung durchströmt wird. Die sich daraus ergebenden Vorteile wurden bereits im Zusammenhang mit der erfindungsgemäßen Vorrichtung beschrieben. Zur Vermeidung von Wiederholungen wird daher auf die entsprechenden Passagen verwiesen.

Weitere zweckmäßige und/oder vorteilhafte Merkmale und Verfahrensschritte ergeben sich aus den Unteransprüchen und der Beschreibung. Besonders bevorzugte Ausführungsformen der Erfindung sowie das erfindungsgemäße Verfahrensprinzip werden anhand der beigefügten Zeichnung näher erläutert. In der Zeichnung zeigt:
- Fig. 1: eine Seitenansicht einer ersten Ausführungsform der erfindungsgemäßen Vorrichtung im Teilschnitt,
- Fig. 2: die Vorrichtung gemäß Figur 1 mit abgesenktem Dichtschuh,
- Fig. 3: eine Vorderansicht der Vorrichtung gemäß Figur 1 im Schnitt III-III.
- Fig. 4: eine Teil-Vorderansicht einer weiteren Ausführungsform der erfindungsgemäßen Vorrichtung im Schnitt,
- Fig. 5: eine Vorderansicht einer weiteren Ausführungsform der erfindungsgemäßen Vorrichtung im Schnitt,
- Fig. 6: eine Seitenansicht einer weiteren Ausführungsform der erfindungsgemäßen Vorrichtung im Teilschnitt,
- Fig. 7: eine Vorderansicht der Vorrichtung gemäß Figur 6 im Schnitt VII-VII, und
- Fig. 8: eine Teil-Vorderansicht einer weiteren Ausführungsform der erfindungsgemäßen Vorrichtung.

Die in den Figuren dargestellten Vorrichtungen dienen zum Überführen von Filtern aus einem Magazin in eine Förderleitung, um die Filter zu einer Empfangsstation zu schießen. Selbstverständlich sind die Vorrichtungen auch geeignet und dazu ausgebildet und eingerichtet, andere stabförmige Artikel und insbesondere zylinderförmige Artikel der Tabak verarbeitenden Industrie zu überführen.

Die in der Zeichnung dargestellte Vorrichtung 10 umfasst eine Sendereinheit 11, die ein als rotierend antreibbare Trommel 12 ausgebildetes Förderelement aufweist. Die Trommel 12 ist zwischen zwei feststehenden Stützringen 40, 41 gelagert. und mit Mulden 13 zur Aufnahme der stabförmigen Artikel 14 versehen. Die Mulden 13 sind jeweils durch einen Steg 35 voneinander getrennt. Durch die Rotation der Trommel 12 um eine Achse R sind die Artikel 14 queraxial förderbar, und zwar vorzugsweise von einem Magazin 15 in den Bereich einer Ausblaszone 16. Die Artikel 14 sind aber auch direkt der Trommel 12 zuführbar. Optional kann der Trommel 12 eine Abweiserrolle 17 oder dergleichen zugeordnet sein, mittels der die Zuordnung der Artikel 14 zu den Mulden 13 bzw. in die Mulden 13 unterstützt wird. Wie erwähnt, ist die Trommel 12 zum Überführen der Artikel 14 aus einer oberen Aufnahmezone Z_{AUF} in eine untere Abgabezone Z_{AB} ausgebildet. In der Aufnahmezone Z_{AUF}, also z.B. in dem Magazin 15 herrscht Atmosphärendruck. Im Bereich der Abgabezone Z_{AB}, also in der Ausblaszone 16 herrscht ein durch einströmende Druckförderluft gebildeter Förderdruck. Durch die Eintrommellösung der Vorrichtung 10 sind die Artikel 14 direkt aus dem Magazin 15 queraxial in die Ausblaszone 16 förderbar.

Die Trommel 12 ist teilweise von einem Dichtschuh 18 umgeben. Genauer ist ein Dichtschuh 18 derart ausgebildet, dass der Dichtschuh 18 mit seiner der Trommel 12 zugewandten Seite an die Kreisbogenform der Trommel 12 angepasst ist. Anders ausgedrückt weist der Dichtschuh 18 auf der der Trommel 12 zugewandten Seite eine konkave Wandung auf. Dadurch umschließt der Dichtschuh 18 die Trommel 12 teilweise, so dass zwischen der Trommel 12 und dem Dichtschuh 18 ein Dichtbereich 19 gebildet ist. Die Trommel 12 dichtet radial gegen den Dichtschuh 18 z.B. durch einen eng tolerierten Durchmesser der Bohrung in dem Dichtschuh 18 und der Trommel 12. Die radiale Dichtung kann alternativ zum engen Spalt oder zusätzlich durch Dichtringe, Dichtscheiben oder dergleichen realisiert sein. Die radiale Dichtung wird im Bereich der Ausblaszone 16 durch einen in den Dichtschuh 18 eingearbeiteten Kanal 20 oder dergleichen (z.B. Nut) begrenzt. Im Bereich der Ausblaszone 16 ist ein Abschusskanal 21 vorgesehen bzw. ausgebildet, der eine Höhe aufweist, die geringfügig größer als der Durchmesser der jeweils zu fördernden Artikel 14 ist. Der Abschusskanal 21 ist einerseits durch den Dichtschuh 18 und andererseits durch die jeweils durch Rotation der Trommel 12 in der Ausblaszone 16 befindlichen Mulde 13 gebildet. Anders ausgedrückt bildet jede Mulde 13 im Bereich der Ausblaszone 16 mit dem dann der Mulde 13 gegenüberliegenden Abschnitt des Dichtschuhs 18 den Abschusskanal 21. Eingangsseitig ist dem Abschusskanal 21 ein Zugang 22 zugeordnet. Dieser Zugang 22 bzw. dessen Eingangsöffnung dient zum Einleiten einer Druckluftströmung in den Abschusskanal 21 für den Abschuss des jeweils in dem Abschusskanal 21 befindlichen Artikels 14.

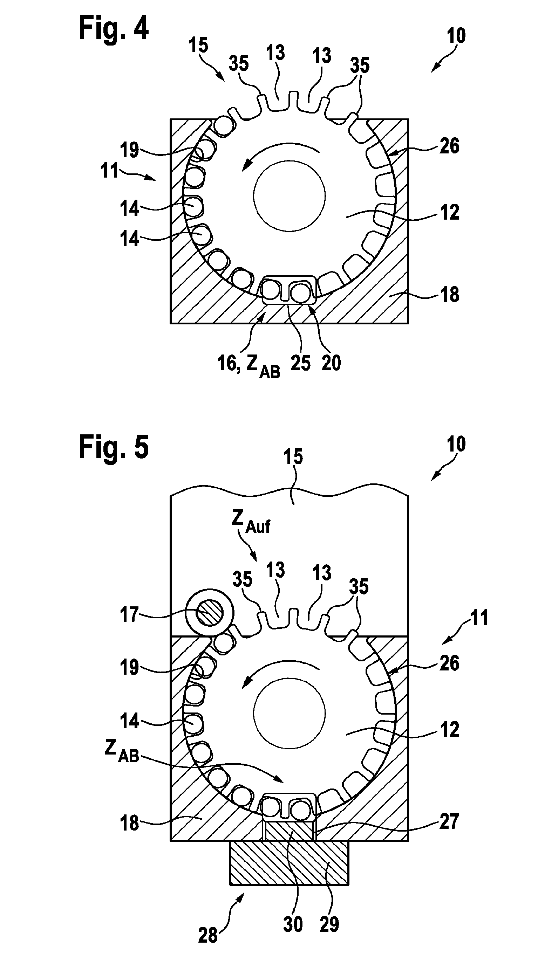

Erfindungsgemäß ist der Zugang 22 zum Einleiten einer konstanten Druckluftströmung in den Abschusskanal 21 ausgebildet und eingerichtet. Das bedeutet, dass der Zugang auf konstruktive Weise derart gestaltet und angeordnet ist, um in dem Abschusskanal 21 einen permanent anliegenden Förderdruck aufzubauen und aufrecht zu erhalten, damit die Artikel 14 in eine permanent strömende Druckluftströmung einlegbar sind. Dies kann auf unterschiedliche Weise realisiert sein. Vorzugsweise mündet der Zugang 22 zum Einleiten der Druckluftströmung zum Aufbauen und Halten des konstanten Förderdrucks in dem Abschusskanal 21 direkt in die Ausblaszone 16, wobei der Zugang 22 bzw. die Einlassöffnung des Zugangs 22 größer und insbesondere breiter als die Breite einer Mulde 13 nebst zugehörigem Steg 35 der Trommel 12 ist. Insbesondere in der Vorderansicht der Trommel 12 (siehe z.B. Figur 4) ist zu erkennen, dass der Zugang 22 eine Breite aufweist, die größer ist als die Breite von zwei Mulden 13. Unabhängig von der Stellung der Trommel 12 ist somit gewährleistet, dass immer mindestens zwei Mulden 13 gleichzeitig mit der Druckluftströmung gespeist werden. Dies wird besonders dann erreicht, wenn der Zugang 22 bzw. dessen Einlassöffnung mindestens zwei Mulden 13 der Trommel 12 überdeckt. In weiteren Ausführungsformen kann der Zugang 22 auch mehr als zwei Mulden 13 überdecken bzw. freigeben, so dass mehrere Mulden 13 permanent mit der Druckluftströmung beaufschlagt sind.

Vorzugsweise ist der Abschusskanal 21 als Druckraum ausgebildet, in dem der konstante Förderdruck herrscht. Der Abschusskanal 21 kann zum Aufbauen und Halten des Förderdrucks durch mehr als eine Mulde 13 gespeist werden, indem der Zugang 22 mehr als eine Mulde 13 überdeckt. Hierzu weist der Zugang 22 einen im Wesentlichen rechteckigen Querschnitt auf. Bevorzugt liegen der stirnseitige Zugang 22 und der Auslass 23 einander gegenüber, wobei der Auslass in eine Förderleitung mündet. Andere Möglichkeiten der Anordnung und Ausbildung des Zugangs 22 und des Auslasses 23 werden weiter unten beschrieben. Dadurch, dass der Zugang 22 mehr als eine Mulde 13 überdeckt, besteht zwischen dem Zugang 22 und dem Abschusskanal 21 eine permanente Verbindung, so dass der Abschusskanal 21 selbst unmittelbar bevor ein Artikel 14 zum Abschießen in die Abschussposition gedreht wird noch von einer vorauslaufenden Mulde 13, die ihren Artikel 14 bereits abgegeben hat, mit einer Druckluftströmung versorgt werden kann, so dass der Artikel 14 in einen ausschließlich in Förderrichtung wirkenden Förderstrom einlegbar bzw. absetzbar ist.

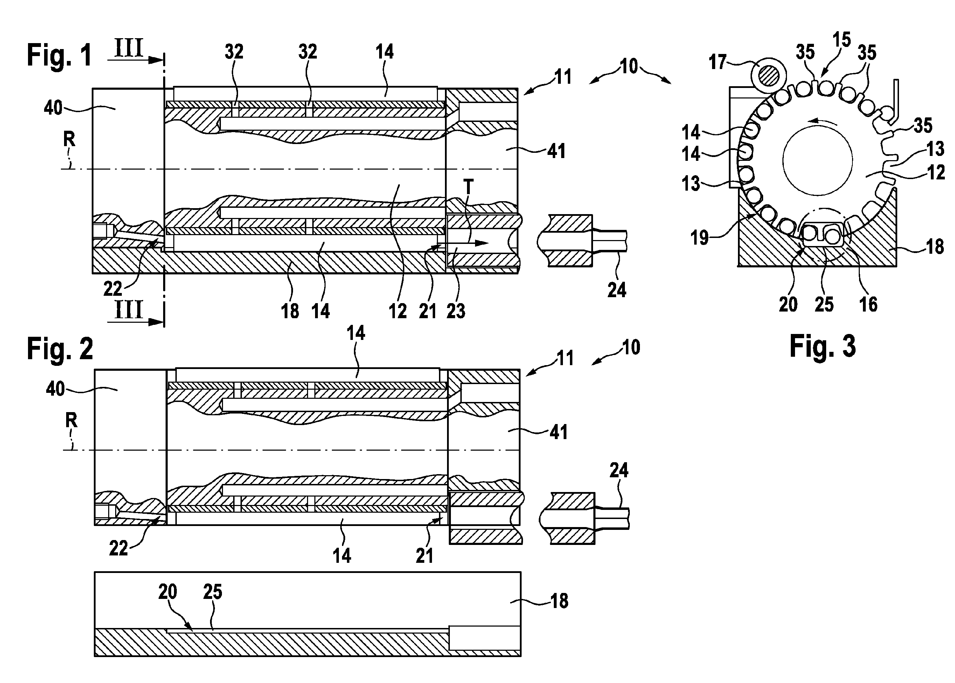

Wie weiter oben erwähnt, wird die radiale Dichtung im Bereich der Ausblaszone 16 durch einen in den Dichtschuh 18 eingearbeiteten Kanal 20 oder dergleichen begrenzt. Beispielsweise weist der Dichtschuh 18 im Bereich des Abschusskanals 21 zur Bildung desselben (zusammen mit einer Mulde 13) eine Nut 25 auf, wobei die Nut 25 ausschließlich in Förderrichtung bzw. Abschussrichtung geöffnet ist (siehe z.B. Figur 2). Durch diese Nut 25 bzw. den durch die Nut 25 gebildeten Absatz vergrößert sich der Abstand zwischen dem Dichtschuh 18 und dem Muldengrund, wobei der Abstand stets größer ist als der Durchmesser des Artikels 14, so dass der Artikel 14 keine Klemmung mehr erfährt und quasi durch die Luftströmung mitgerissen wird.

Der Dichtschuh 18 kann auf unterschiedliche Weise ausgebildet und angeordnet sein. Im Ausführungsbeispiel gemäß der Figuren 1 bis 3 ist der Dichtschuh 18 beispielsweise auf und ab bewegbar, also insbesondere absenkbar, ausgebildet. Bevorzugt ist der Dichtschuh 18 aber ein ortsfestes Dichtgehäuse, das gegenüber der Trommel 12 unbewegbar angeordnet ist. Das Dichtgehäuse weist eine Bohrung 26 auf, in die die Trommel 12 eingesetzt ist. Durch einen eng tolerierten Durchmesser von Bohrung 26 und Trommel 12 dichtet die Trommel 12 radial gegenüber dem Dichtgehäuse zur Bildung des Dichtbereichs 19. Der Dichtbereich 19 des Dichtschuhs 18 bzw. Dichtgehäuses zwischen der Trommel 12 und dem Dichtschuh 18 ist vorzugsweise größer als 180° und kleiner als 360°. Mit diesem bevorzugten Dichtbereich 19, der selbstverständlich auch variieren kann, wird einerseits eine ausreichend große Aufnahmezone Z_{AUF} zum Magazin 15 ermöglicht und andererseits ein ausreichend großer Dichtbereich 19 geschaffen.

Der Dichtschuh 18 kann im Bereich der Ausblaszone 16 radial gerichtet zur Umgebung hin vollständig geschlossen sein (siehe z.B. Figur 4). Außer über den Zugang 22 und den Auslass 23 besteht keine Möglichkeit, in die Ausblaszone 16 einzugreifen. In einer anderen Ausführungsform (siehe z.B. Figur 5) weist der Dichtschuh 18 bzw. das Dichtgehäuse im Bereich der Ausblaszone 16 radial gerichtet eine Öffnung 27 auf. Die Öffnung 27 dient insbesondere zu Reinigungs- und Wartungszwecken der Ausblaszone 16 und weist vorzugsweise eine Breite von etwa zwei Mulden 13 auf. Selbstverständlich kann die Breite der Öffnung 27 variieren. Die Öffnung 27 ist üblicherweise in Betrieb der Vorrichtung 10 geschlossen. Dazu ist ein Dichtelement 28 vorgesehen, das lösbar befestigt dichtend am Dichtschuh 18 anliegt. Das Dichtelement 28 weist einen Dichtklotz 29 und einen Führungsklotz 30 auf. Der Dichtklotz 29 ist breiter als die Öffnung 27 und liegt zur Dichtung am Dichtschuh 18 an. Insbesondere zu Wartungs-und Reinigungszwecken ist das Dichtelement 28 absenkbar. Der Führungsklotz 30 ist geringfügig schmaler als die Öffnung 27 und taucht in diese ein. Die der Trommel 12 zugewandte Oberfläche des Führungsklotzes 30 bildet den Kanal 20 bzw. den Grund der Nut 25 und zusammen mit der entsprechenden Mulde 13 den Abschusskanal 21. Die Oberfläche des Führungsklotzes 30 kann eben oder bevorzugt gekrümmt ausgebildet sein, wobei die Krümmung an die der Bohrung 26 angepasst ist.

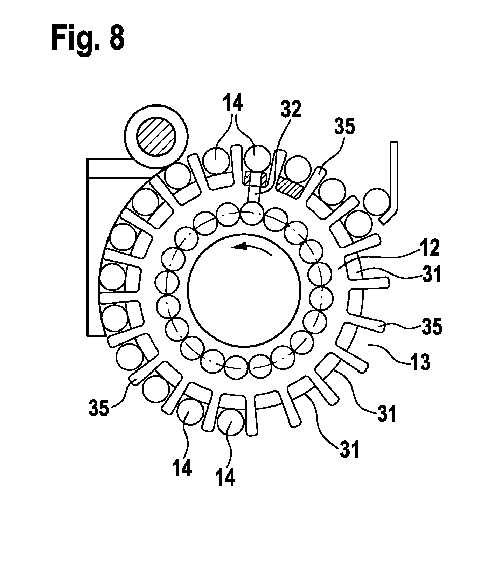

Die Artikel 14 können in den Mulden 13, sowohl im Bereich der Aufnahmezone Z_{AUF} als auch im Dichtbereich 19, frei beweglich oder geklemmt bzw. gepresst angeordnet sein. Bevorzugt ist der Abstand insbesondere im Dichtbereich 19 zwischen der konkaven Innenfläche des Dichtschuhs 18 und dem Grund der Mulden 13 der Trommel 12 kleiner als der Durchmesser der zu fördernden Artikel 14. Das bedeutet, dass zwischen der konkav ausgebildeten Wandung des Dichtschuhs 18 und dem Grund der Mulden 13 eine Klemmung für die Artikel 14 vorgesehen ist. Diese Klemmung kann auf unterschiedlichen Weise realisiert und fest oder variabel sein. In einer Ausführungsform (siehe z.B. Figur 4) ist der Abstand vom Dichtschuh 18 zum Grund der Mulden 13 immer kleiner als der Durchmesser der Artikel 14. Im Bereich des Kanals 20 bzw. der Nut 25 ist der Abstand zwischen dem Dichtschuh 18 bzw. dem Führungsklotz 30 dann immer größer als der Durchmesser der Artikel 14. In einer anderen Ausführungsform (siehe z.B. Figur 8) kann der Abstand vom Dichtschuh 18 zum Grund der Mulden 13 variabel sein. Der Abstand und damit die Klemmwirkung bzw. Presskraft auf die Artikel 14 ist durch auswechselbare und/oder aufblasbare Auflagen 31, die auch als Formatauflagen bezeichnet werden, veränderbar. Durch das Einlegen solcher Auflagen 31 ist der Abstand zwischen dem Grund der Mulde 13 und dem Dichtschuh zu Zwecken der Formatanpassung, also der Anpassung z.B. an Artikel 14 mit unterschiedlichem Durchmesser, veränderbar.

In weiteren Ausführungsformen können die Mulden 13 Öffnungen 32, vorzugsweise in Form von Bohrungen, zum Anschluss an ein Vakuumsystem und/oder Druckluftsystem aufweisen, wobei der Trommel 12 außerhalb des Dichtbereichs 19 und/oder im Dichtbereich 19 ein Einlass 33, z.B. in Form eines Schlitzes und/oder einer Bohrung, zugeordnet ist (siehe z.B. Figuren 1, 2, 6). Diese Öffnungen 32 können z.B. zum Unterstützen der Befüllung der Mulden 13 mit Artikeln 14 in der Aufnahmezone Z_{AUF} oder zum Verändern des Abstands zwischen Dichtschuh 18 und den Auflagen 31 in den Mulden 13 eingesetzt werden. Die Tiefe der Mulden 13 zur Veränderung des Abstands zum Dichtschuh 18 kann z.B. dadurch verändert werden, indem die Mulden 13 mit ihren Auflagen 31 über den Einlass 33 und die Öffnungen 32 an ein Vakuumsystem angeschlossen sind. Durch Drehung der Trommel 12 sind die Öffnungen 32 der Mulden 13 mit dem Einlass 33 im Dichtbereich 19 in Überdeckung bringbar. Dadurch sind die Auflagen 31 durch Beaufschlagen mit Saugluft oder Druckluft anhebbar oder verformbar. Im Bereich der Aufnahmezone Z_{AUF} kann der Trommel 12 ebenfalls ein Einlass 33 oder dergleichen zugeordnet sein (siehe z.B. Figur 8). Sobald die drehende Trommel 12 die Mulden 13 mit ihren Öffnungen 32 bzw. Bohrungen in Überdeckung mit dem Einlass 33 oder dergleichen bringt, kann die Saugluft oder Druckluft in die bzw. auf die Mulden 13 oder deren Auflagen 31 wirken. Das Vakuumsystem ist bezüglich der Stärke der Saugluft oder Druckluft individuell bzw. separat steuerbar. Insbesondere beim Ansaugen der Artikel 14 in der Aufnahmezone Z_{AUF} ist die Saugluft bzw. deren Stärke von verschiedenen Faktoren, insbesondere von der Drehzahl der Trommel 12 abhängig.

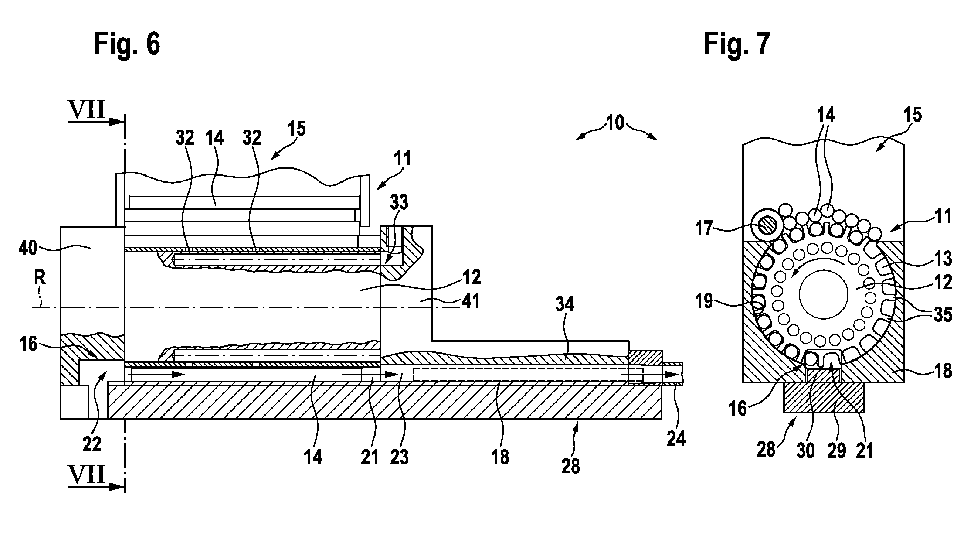

Weitere Ausführungsformen der Erfindung können vorsehen, dass der Zugang 22 wahlweise radial und/oder axial zur Trommel ausgerichtet ist. In der Figur 1 ist eine axiale Zuführung des Zugangs 22 über den Stützring 40 gezeigt. Die Ausführungsform gemäß der Figur 6 offenbart eine radiale Zuführung des Zugangs 22 über den Dichtschuh 18. Der Figur 6 ist weiterhin zu entnehmen, dass der Abschusskanal 21 in axialer Richtung verlängert ist. An den Abschusskanal 21 schließt sich ein Verlängerungsrohr 34 an, das den Übergang zur Förderleitung 24 bildet. Die Verlängerung führt insbesondere zu einem ruhigen Austritt der Artikel 14 aus der Vorrichtung 10.

Im Folgenden wird das Verfahrensprinzip anhand der Figuren näher erläutert: Die Artikel 14, also z.B. die Filter, werden dem Magazin 15 zugeführt, wo sie unter Atmosphärendruck liegen. In der Aufnahmezone Z_{AUF} des Magazins 15, also außerhalb einer Druck- oder Strömungskammer, werden die Filter vereinzelt in die Mulden 13 gefüllt. Bei der Vereinzelung und Befüllung wirkt die Abweiserrolle 17 unmittelbar im Übergang von der Aufnahmezone Z_{AUF} in den Dichtbereich 19 unterstützend. Nach der Vereinzelung der Artikel 14 erfolgt ein Einzeltransport jedes Artikels 14 mit der Trommel 12 aus der Aufnahmezone Z_{AUF} in die Abgabezone Z_{AB}, also vom Magazin 15 in den Bereich der Ausblaszone 16. Durch das Einzelkammerprinzip des Transports arbeitet die Trommel 12 in Verbindung mit dem Dichtschuh 18 als eine Art Zellradschleuse.

In der Abgabezone Z_{AB} bzw. Ausblaszone 16 wird über den Zugang 22 eine Druckluftströmung in den Abschusskanal 21 eingeleitet, so dass in dem Abschusskanal 21 ein konstanter Förderdruck herrscht. In jeder Mulde 13 wird ein Artikel 14 durch Drehung der Trommel 12 um die Achse R in die Ausblaszone 16 transportiert und darin losgelassen. Der Artikel 14 wird dabei von der in dem Abschusskanal 21, der ja vom Dichtschuh 18 und der Mulde 13 gebildet wird, konstanten Druckluftströmung mitgerissen und in axialer Richtung in die Förderleitung 24 transportiert. Anders ausgedrückt wird jeder Artikel 14 aus der den Abschusskanal 21 bildenden Mulde 13 der sich drehenden Trommel 12 geschossen. Dazu wird in der Ausblaszone 16 stets und permanent mehr als eine Mulde mit der Druckluftströmung versorgt, so dass neben der den jeweils abzuschießenden Artikel 14 tragenden Mulde 13 mindestens eine weitere Mulde 13 mit Druckluft versorgt wird. Dadurch herrscht in der Ausblaszone bzw. genauer im Abschusskanal 21 eine konstante Luftströmung in Transportrichtung T.

Während des Transports der Artikel 14 vom Magazin 15 in die Ausblaszone 16 werden die Artikel 14 vorzugsweise geklemmt bzw. einer geringen Pressung ausgesetzt, um eine vorzeitige axiale Bewegung der Artikel 14 zu verhindern. Aufgrund der genannten Klemmung wird zudem der Dichtbereich 19 zusätzlich durch die Artikel 14 selbst abgedichtet, was wiederum die Leckverluste reduziert. Jeder Artikel 14 wird einzeln durch Drehung der Trommel 12 in die Ausblaszone 16 transportiert. An der Einlaufkante zur Ausblaszone 16 bzw. genauer beim Einlaufen in den Bereich des Kanals 20 bzw. der Nut 25 im Dichtschuh 18 werden die Artikel 14 von der Klemmung bzw. Pressung befreit, also quasi losgelassen. Nach dem Loslassen der Artikel 14 werden diese von der Druckluftströmung axial aus der Mulde 13 der sich drehenden Trommel 12 in die Förderleitung 24 transportiert.

In der Aufnahmezone Z_{AUF} können die Artikel 14 aktiv in die Mulden 13 gesaugt werden, indem die Mulden 13 über Öffnungen 32 durch Drehung der Trommel 12 an einen Einlass 33 angeschlossen bzw. mit diesem in Überdeckung gebracht werden. Die Saugkraft, mit der die Artikel 14 in der Aufnahmezone Z_{AUF} angesaugt werden, ist steuerbar. Insbesondere in Abhängigkeit der Drehzahl der Trommel 12 wird die Saugluft zu Zwecken der Energieeinsparung eingestellt.

Für den Fall, dass in den Mulden 13 die austauschbaren Auflagen 31 angeordnet sind, können diese auch als so genannte Fluidmuskel ausgebildet sein und durch Beaufschlagen mit Druckluft oder Saugluft insbesondere im Dichtbereich 19 verformt werden, um den Abstand zwischen den Auflagen 31 und der konkaven Wandung des Dichtschuhs 18 zu verändern.

Durch Freigabe der Öffnung 27 im Dichtschuh 18 kann ein Zugriff in die Ausblaszone 16 ermöglicht werden. Dazu wird das Dichtelement 28 abgesenkt, so dass die Öffnung 27 freigegeben wird.

## Patentansprüche

1. Vorrichtung (10) zum Überführen stabförmiger Artikel (14) der Tabak verarbeitenden Industrie aus einem Magazin (15) in eine Förderleitung (24), umfassend eine Sendereinheit (11), die eine rotierend antreibbare Trommel (12) mit Mulden (13) zum Aufnehmen der stabförmigen Artikel (14) aus dem unter Atmosphärendruck stehenden Magazin (15) und queraxialen Fördern der stabförmigen Artikel (14) direkt in den Abgabebereich einer Ausblaszone (16) umfasst, wobei die Trommel (12) von einem die Trommel (12) teilweise kreisbogenförmig umschließenden Dichtschuh (18) zur Bildung eines Dichtbereichs (19) umgeben ist und im Bereich der Ausblaszone (16) ein aus einer jeweils durch Rotation der Trommel (12) in der Ausblaszone (16) befindlichen Mulde (13) und dem Dichtschuh (18) gebildeter Abschusskanal (21) vorgesehen ist, und wobei ein Zugang (22) zum Einleiten einer Druckluftströmung in den Abschusskanal (21) für den Abschuss des jeweils in dem Abschusskanal (21) befindlichen Artikels (14) ausgebildet ist, **dadurch gekennzeichnet, dass** der Zugang (22) zum Einleiten einer konstanten Druckluftströmung in den Abschusskanal (21) ausgebildet und eingerichtet ist, wobei der Zugang (22) stets mit mindestens zwei benachbarten Mulden (13) verbunden ist.

2. Vorrichtung nach Anspruch 1, **dadurch gekennzeichnet, dass** der Zugang (22) zum Einleiten der Druckluftströmung zum Aufbauen und Halten eines konstanten Förderdrucks in dem Abschusskanal (21) direkt in die Ausblaszone (16) mündet, wobei der Zugang (22) bzw. die Einlassöffnung des Zugangs (22) breiter als die maximale Breite einer Mulde (13) nebst einem zugehörigen Steg (35) der Trommel (12) ist.

3. Vorrichtung nach Anspruch 1 oder 2, **dadurch gekennzeichnet, dass** der Zugang (22) bzw. die Einlassöffnung des Zugangs (22) mindestens zwei Mulden (13) der Trommel (12) überdeckt.

4. Vorrichtung nach einem der Ansprüche 1 bis 3, **dadurch gekennzeichnet, dass** zwischen dem Zugang (22) und dem Abschusskanal (21) eine permanente Verbindung besteht.

5. Vorrichtung nach einem der Ansprüche 1 bis 4, **dadurch gekennzeichnet, dass** der Dichtschuh (18) im Bereich des Abschusskanals (21) zur Bildung desselben eine Nut (25) aufweist, wobei die Nut (25) in Förderrichtung geöffnet ist.

6. Vorrichtung nach einem der Ansprüche 1 bis 5, **dadurch gekennzeichnet, dass** der Dichtschuh (18) ein ortsfestes Dichtgehäuse ist, das gegenüber der Trommel (12) unbewegbar angeordnet ist.

7. Vorrichtung nach einem der Ansprüche 1 bis 6, **dadurch gekennzeichnet, dass** der kreisbogenförmige Dichtbereich (19) des Dichtschuhs (18) zur Bildung der Dichtfläche zwischen der Trommel (12) und dem Dichtschuh (18) größer als 180° und kleiner als 360° ist.

8. Vorrichtung nach einem der Ansprüche 1 bis 7, **dadurch gekennzeichnet, dass** der Dichtschuh (18) im Bereich der Ausblaszone (16) eine Öffnung (27) zum Reinigen und/oder Warten der Ausblaszone (16) aufweist und dass die Öffnung (27) durch ein gegen den Dichtschuh (18) linear anliegendes Dichtelement (28) dichtend verschließbar ist.

9. Vorrichtung nach einem der Ansprüche 1 bis 8, **dadurch gekennzeichnet, dass** im Dichtbereich (19) der Abstand zwischen der der Trommel (12) zugewandten konkaven bzw. kreisbogenförmigen Wandung des Dichtschuhs (18) und dem Grund der Mulde (13) der rotierenden Trommel (12) kleiner ist als die Breite der Mulde (13) auf der Höhe des halben Abstands und vorzugsweise kleiner als der Durchmesser der zu fördernden Artikel (14) ist.

10. Vorrichtung nach einem der Ansprüche 1 bis 9, **dadurch gekennzeichnet, dass** in den Mulden (13) der rotierenden Trommel (12) auswechselbare und/oder aufblasbare Auflagen (31) zur Veränderung des Abstands zwischen der Wandung des Dichtschuhs (18) und dem Grund der Mulde (13) angeordnet sind.

11. Vorrichtung nach einem der Ansprüche 1 bis 10, **dadurch gekennzeichnet, dass** die Mulden (13) der rotierenden Trommel (12) Öffnungen (32) zum Anschluss an ein Vakuumsystem und/oder Druckluftsystem aufweisen, wobei der rotierenden Trommel (12) außerhalb des Dichtbereiches (19) und/oder im Dichtbereich (19) ein Einlass (33) zum Anlegen von Saugluft und/oder Druckluft an die Öffnungen (32) zugeordnet ist und dass die Stärke der Saugluft und Druckluft separat steuerbar ist.

12. Verfahren zum Überführen stabförmiger Artikel (14) der Tabak verarbeitenden Industrie aus einem Magazin (15) in eine Förderleitung (24), mit den Schritten
- Aufnehmen der stabförmigen Artikel (14) aus dem unter Atmosphärendruck stehenden Magazin (15) in Mulden (13) einer Trommel (12),
- queraxiales Fördern der stabförmigen Artikel (14) direkt in den Abgabebereich einer Ausblaszone (16) mittels der Trommel (12), und
- axiales Fördern der Artikel aus einem aus einer jeweils durch Rotation der Trommel (12) in der Ausblaszone (16) befindlichen Mulde (13) und einem Dichtschuh (18) gebildeten Abschusskanal (21) durch eine in den Abschusskanal (21) eingeleitete Druckluftströmung,
**dadurch gekennzeichnet, dass** die Artikel (14) im Abschusskanal durch eine konstante Druckluftströmung axial in die Förderleitung (24) transportiert werden, wobei stets mehr als eine Mulde (13) im Bereich der Ausblaszone (16) kontinuierlich von einer Druckluftströmung durchströmt wird.

13. Verfahren nach Anspruch 12, **dadurch gekennzeichnet, dass** die Artikel (14) während des Transports vom Magazin (15) in die Ausblaszone (16) zwischen der Trommel (12) und dem Dichtschuh (18) gepresst bzw. geklemmt werden und dass die Artikel (14) im Bereich der Ausblaszone (16) losgelassen und in den kontinuierlichen Förderluftstrom bewegt werden.

14. Verfahren nach Anspruch 12 oder 13, **dadurch gekennzeichnet, dass** die Artikel (14) in der Aufnahmezone Z_{AUF} des Magazins (15) aktiv in die Mulden (13) gesaugt werden.

15. Verfahren nach einem der Ansprüche 12 bis 14, **dadurch gekennzeichnet, dass** der Abstand vom Grund der Mulden (13) zur konkaven Wandung des Dichtschuhs (18) zur Formatanpassung verändert wird.
